# EUROPÄISCHE PATENTANMELDUNG

(11) **EP 3 159 129 A1**
(43) Veröffentlichungstag der Anmeldung: **26.04.2017**
(21) Anmeldenummer: 15191005.6
(22) Anmeldetag: 22.10.2015
(51) Int. Cl.: B29C 33/38, B29C 44/12, B29C 44/14, B29C 44/44

(54) **HERSTELLUNG VON KOMPLEXEN SCHAUM-/ ODER SANDWICHHOLSTRUKTUREN MITTELS EINES FORMKERNS**

(71) Anmelder: Evonik Röhm GmbH, 64293 Darmstadt (DE)
(72) Erfinder: KRAATZ, Armin, 64287 Darmstadt (DE); HOLLEYN, Denis, 65558 Balduinstein (DE)

(57) **Zusammenfassung**

Die Erfindung betrifft ein Verfahren zur Herstellung von komplexen, formgeschäumten Hartschaumwerkstoffen, insbesondere von Poly(meth)acrylimid- (P(M)l-), bevorzugt von Polymethacrylimid- (PMI-)Kernen, die zum Beispiel im Automobil- oder Flugzeugbau zum Einsatz kommen können. Das Verfahren zeichnet sich dabei dadurch aus, dass durch Einsatz eines partikulären Kerns während des Schäumens eine zusätzliche Gewichtsersparnis gegenüber Schaumwerkstoffen oder Sandwichmaterialien des Standes der Technik realisiert werden kann.

## Beschreibung

### Gebiet der Erfindung

Die Erfindung betrifft ein Verfahren zur Herstellung von komplexen, formgeschäumten Hartschaumwerkstoffen, insbesondere von Poly(meth)acrylimid- (P(M)I-), bevorzugt von Polymethacrylimid- (PMI-)Kernen, die zum Beispiel im Automobil- oder Flugzeugbau zum Einsatz kommen können. Das Verfahren zeichnet sich dabei dadurch aus, dass durch Einsatz eines partikulären Kerns während des Schäumens eine zusätzliche Gewichtsersparnis gegenüber Schaumwerkstoffen oder Sandwichmaterialien des Standes der Technik realisiert werden kann.

### Stand der Technik

Für viele leichtbautechnische Anwendungen werden heutzutage Kernmaterialien auf Basis von Hartschaumstoffen eingesetzt. Diese werden in den meisten Fällen mit Deckschichten aus z.B. Carbonfaser- oder Glasfaser-verstärkten Compositematerialien, Metallen oder Holz verbunden und so ein Sandwichbauteil aufgebaut. Sandwichbauteile liefern in vielen Fällen das beste Verhältnis zwischen Gewicht und mechanischen Eigenschaften. Bei sehr großvolumigen Bauteilen, wie z.B. bei komplexen dreidimensionalen Strukturen mit großer Dicke, oder auch abhängig vom vorliegenden Beanspruchungsfall des Bauteils, kann es aber sein, dass das Kernamterial in der finalen Anwendung nicht komplett benötigt wird. Es dient in diesen Fällen vor allem als Fertigungshilfsmittel, welches im finalen Bauteil unnötig mit zusätzlichem Gewicht beiträgt.

Zur Herstellung von Faserverbundhohlstrukturen werden heute in kleinen Stückzahlen Wachskerne eingesetzt. Hierbei werden Faserverbundmaterialien auf Wachskerne appliziert, in verschiedenen Infusionsverfahren konsolidiert und abschließend der Wachskern entfernt. Aufgrund der Wachskerne sind die Verarbeitungsverfahren jedoch auf geringe Temperaturen und geringe Drücke beschränkt und die Entfernung des Wachskerns hat sich als sehr komplexer Verfahrensschritt erwiesen. Hieraus ergeben sich nur sehr große Zykluszeiten bei der Verarbeitung. Somit können nur sehr kleine Stückzahlen realisiert werden. Zur Herstellung von Schäumen mit einem Hohlraum ist ein solches Verfahren nicht geeignet. So ist ein Ausschmelzen innerhalb eines Schaumkerns allein schon aufgrund der Diffusion in die Poren ausgeschlossen. Alternativ müsste der Wachskern über eine großflächige Aussparung entfernt werden, was wiederum zu einer verminderten Stabilität des Schaumkerns führen würde.

Im Weiteren wird ein Überblick über die Herstellung von P(M)I-Schaumwerkstoffen bzw. - Sandwichmaterialien gegeben. Diese Verfahren sind auf andere Hartschaumstoffe, wie zum Beispiel PE-, PP-, PU-, PET- oder PVC-Schäume einfach zu übertragen.

In DE 27 26 260 wird die Herstellung von Poly(meth)acrylimid-Schäumen (P(M)I-Schäumen) beschrieben, die ausgezeichnete mechanische Eigenschaften auch bei hohen Temperaturen aufweisen. Die Herstellung der Schäume erfolgt im Gussverfahren, d.h. die Monomere und erforderliche Zusatzstoffe werden gemischt und in einer Kammer polymerisiert. Das Polymerisat wird in einem zweiten Schritt durch Erwärmen geschäumt. Dieses Verfahren ist sehr aufwendig und kaum zu automatisieren.

DE 3 630 930 beschreibt eine weiteres Verfahren zur Schäumung der oben genannten Copolymerplatten aus Methacrylsäure und Methacrylnitril. Hierbei werden die Polymerplatten mit Hilfe eines Mikrowellenfeldes zum Schäumen gebracht, weshalb dieses im Folgenden als Mikrowellenverfahren bezeichnet wird. Hierbei muss beachtet werden, dass die zu schäumende Platte oder zumindest ihre Oberfläche vorher bis oder über den Erweichungspunkt des Materials erhitzt werden muss. Da unter diesen Bedingungen naturgemäß auch die Schäumung des durch die äußerliche Erwärmung erweichten Materials einsetzt, ist der Schäumprozess allein durch den Einfluss eines Mikrowellenfeldes nicht steuerbar, sondern muss von einem begleitenden Heizen von außen mitgesteuert werden. Es wird also zu dem normalen einstufigen Heißluftverfahren ein Mikrowellenfeld hinzugeschaltet um die Schäumung zu beschleunigen. Das Mikrowellenverfahren hat sich jedoch als zu kompliziert und daher nicht praxisrelevant erwiesen und findet bis heute keine Anwendung.

Neben PMI-Schäumen sind mit ähnlichen Eigenschaften auch Schäume auf Basis von Methacrylsäure und Acrylnitril (PI-Schäume) bekannt. Diese werden beispielsweise in der CN 100420702C beschrieben. Jedoch werden auch diese Schäume mittels Platten hergestellt.

Es sind neben diesen Verfahren, die von einer nicht geschäumten Polymerplatte ausgehen, auch so genannte In-Mold-Foaming Prozesse, ausgehend von einem Granulat, bekannt. Gegenüber den beschriebenen Verfahren haben diese jedoch grundsätzlich mehrere Nachteile. So wird nur eine ungleichmäßige Porenstruktur, die sich zwischen dem Inneren der ursprünglichen Partikel und den Grenzflächen zwischen den ursprünglichen Partikeln unterscheidet, erzielt. Weiterhin ist die Dichte des Schaums aufgrund der ungleichmäßigen Verteilung der Partikel beim Aufschäumen - wie bereits beschrieben - zusätzlich inhomogen. Weiterhin kann man diesen aus Granulat geschäumten Produkten eine schlechtere Kohäsion an den Grenzflächen, die sich zwischen den ursprünglichen Partikeln beim Schäumen bilden, und damit gegenüber aus einer Halbzeugplatte geschäumten Materialien schlechtere mechanische Eigenschaften beobachten.
In WO 2013/05947 wird ein In-Mold-Verfahren beschrieben, bei dem zumindest letzteres Problem dadurch gelöst wurde, dass die Partikel vor dem Abfüllen in das formgebende Schäumungswerkzeug mit einem Haftvermittler, z.B. mit einem Polyamid oder einem Polymethacrylat beschichtet werden. Damit wird eine sehr gute Korngrenzenhaftung erzielt. Die ungleiche Porenverteilung im Endprodukt wird durch diese Methode jedoch nicht vermieden.

Jedoch ist das In-Mold-Foaming für Hartschäume, insbesondere für P(M)I-Schäume bis dato kaum beschrieben. Für andere Schaumwerkstoffe sind solche Verfahren dagegen schon lange bekannt. So werden Polyurethan-Schäume aus einer entsprechenden reaktiven Flüssigkeit zumeist bei Raumtemperatur hergestellt. Schäume aus PE, PP, Polystyrol oder Polymilchsäure (PLA) werden in einem In-Mold-Foaming-Prozess aus einem Granulat hergestellt.

In der deutschen Patentanmeldung mit dem Anmeldeaktenzeichen 102014209425.9 wird ein Verfahren offenbart, bei dem ein P(M)I-Granulat in einem zweischaligen Presswerkzeug mit konturfolgenden Kavitäten, mittels derer sowohl geheizt als auch gekühlt wird, thermisch aufgeschäumt wird. Dieses Verfahren stellt gegenüber dem Stand der Technik eine deutliche Effizienzsteigerung dar. Da jedoch im gleichen Werkzeug sowohl erhitzt und damit geschäumt, als auch gekühlt wird, ist die Werkzeugbelegzeit und damit die Produktionstaktung noch immer relativ lang. Weiterhin ergeben sich aufgrund von Temperaturgradienten innerhalb des zu schäumenden Materials von außen nach innen noch immer feststellbare Dichtegradienten im hergestellten Schaumkern.

### Aufgabe

Vor dem Hintergrund des diskutierten Standes der Technik war es daher Aufgabe der vorliegenden Erfindung, ein neues Verfahren zur Verfügung zu stellen, womit großvolumige, komplex geformte Hartschaumkerne oder Sandwichbauteilen mit gegenüber dem Stand der Technik reduziertem finalen Gewicht, unter Verwendung der bereits etablierten Herstellungsprozesse der Bauteile, realisiert werden können.

Insbesondere war es Aufgabe der vorliegenden Erfindung mittels diesem Verfahrens einfach und mit hoher Durchsatzgeschwindigkeit Hartschaum-, insbesondere P(M)I-Partikel in einem In-Mold-Foaming-Prozess zu geformten Hartschaumkernen oder zu Sandwichmaterialien verarbeitet werden können, wobei diese gegenüber dem Stand der Technik ein zusätzlich deutlich reduziertes Gewicht aufweisen sollen.

Darüber hinaus war es Aufgabe der vorliegenden Erfindung ein Verfahren für das In-Mold-Foaming von P(M)I zur Verfügung zu stellen, das zu Endprodukten mit einem inneren Hohlraum und gleichzeitig einer sehr gleichmäßigen Dichteverteilung und engen Porengrößenverteilung innerhalb des Schaumstoffs führt.

Insbesondere bestand die Aufgabe, dass dieses Verfahren im Vergleich zu Verfahren des Standes der Technik mit kurzen Zykluszeiten durchführbar ist und ohne besondere Nacharbeiten bereits zu Hartschaumkernen in der finalen Geometrie führt.

Weitere, an dieser Stelle nicht explizit diskutierte Aufgaben, können sich aus dem Stand der Technik, der Beschreibung, den Ansprüchen oder den Ausführungsbeispielen ergeben.

Im Zusammenhang des vorliegenden Textes werden unter der Formulierung Poly(meth)acrylimid (P(M)I) Polymethacrylimide, Polyacrylimide oder Mischungen daraus verstanden. Entsprechendes gilt für die entsprechenden Monomere wie (Meth)acrylimid bzw. (Meth)acrylsäure. So werden beispielsweise unter dem Begriff (Meth)acrylsäure sowohl Methacrylsäure als auch Acrylsäure sowie Mischungen aus diesen beiden verstanden.

### Lösung

Gelöst werden die genannten Aufgaben durch das Bereitstellen eines neuartigen Verfahrens zur Herstellung von komplexen Hartschaumkernen, bei denen es sich besonders bevorzugt um Poly(meth)acrylimid- (P(M)I)-Hartschaumkerne handelt. Der Begriff Hartschaumkern umfasst dabei generisch Schaumkörper ohne Deckschichten, insbesondere aber nicht zwingend aus Hartschaumstoffen, und Schaumkerne, in Composite- oder Sandwichmaterialien.

Dieses erfindungsgemäße Verfahren weist folgende Verfahrensschritte auf:
a. Herstellen eines mit Partikeln gefüllten, aus einer Folie bestehenden. Füllkerns,
b. Einlegen des Füllkerns in ein Werkzeug und anschließendes Schließen des Werkzeugs,
c. Einfüllen von vor- oder ungeschäumten Matrixpartikeln in die Kavität zwischen dem Füllkern und der Innenwand des Werkzeugs,
d. Schäumen der Matrixpartikel, Öffnen des Werkzeugs und Entnahme des Hartschaumkerns,
e. optionales Öffnen der Folie an dem zugänglichen ehemaligen Berührungsbereich aus Verfahrensschritt b. und
f. Entnahme der Partikel aus dem Hartschaumkern.

Insbesondere des Einlegens des Füllkerns in Verfahrensschritt b. gibt es verschiedene Varianten, die den Gesamtprozess betreffen. Die drei wichtigsten Varianten stellen dabei die folgenden dar:
In einer ersten Variante wird der Füllkern in Verfahrensschritt b. derart in das Werkzeug eingelegt, dass der Füllkern zwischen 0,5 und 10, bevorzugt 1 bis 5 Flächenprozent der Innenwand des Werkzeugs berührt. Dabei kann die Öffnung beispielsweise schlicht eingehängt werden. Bei dieser Variante entfällt in der Regel Verfahrensschritt e. und die Entnahme der Partikel in Verfahrensschritt f. erfolgt am einfachsten.

In einer zweiten Variante wird der Füllkern in Verfahrensschritt b. derart eingelegt, dass der Füllkern nach Verfahrensschritt d. vollständig von dem Schaumstoff umgeben ist. Dazu kann der Füllkern beispielsweise an einem Faden in das Werkzeug gehängt werden. Bei dieser Variante der vorliegenden Erfindung wird der Schaumstoff in Verfahrensschritt e. teilweise aufgebohrt oder aufgeschnitten. Dies erfolgt, um die Partikel in Verfahrensschritt f. dann zu entnehmen. Als Resultat erhält man einen Schaumkörper, dessen Hohlraum fast ganz von dem Schaumstoff umhüllt sein kann. Die Größe der nachträglichen Öffnung hängt dabei von der Partikelgröße und der Rieselfähigkeit, sowie eventuell der Form des Hohlraums und der gewünschten Entnahmezeit der Partikel ab.

In einer dritten Variante des erfindungsgemäßen Verfahrens wird der Füllkern in Verfahrensschritt b. derart eingelegt, dass der Füllkern zwischen 0,5 und 10, bevorzugt 1 bis 5 Flächenprozent der Innenwand des Werkzeugs berührt. Zusätzlich ist diese Stelle mit einer leicht zu entfernenden Vorrichtung verschlossen. Dabei kann es sich beispielsweise um einen Stopfen oder eine Klammer handeln. Diese Vorrichtung wird schließlich in Verfahrensschritt e. entfernt. Optional kann die Vorrichtung nach der Entnahme der Partikel wieder eingesetzt und dabei beispielsweise mittels Kleben oder Nähen fixiert werden.

Zu Verfahrensschritten a. und b.: Bezüglich der Partikel sind diese derart auszuwählen, dass sie bis zu einer Temperatur, die der maximal eingesetzten Schäumtemperatur entspricht, rieselfähig bleiben. Rieselfähig bedeutet dabei, dass diese unter Einsatz nur geringer mechanischer Energie, wie z.B. Schütteln, Stoßen oder Stochern, wieder in einen rieselfähigen Zustand versetzt werden können. Bevorzugt sind die Partikel auch unter längerer Belastung unter besagter Schäumtemperatur und Überdruck chemisch stabil, erfahren eine nur geringe Volumenveränderung und schmelzen nicht auf, bzw. verkleben nicht.

Besonders geeignete Partikel sind dabei Sand, bei der Schäumungstemperatur stabile und feste Polymerpartikel, z.B. aus PEEK, Metallpartikel oder Glasperlen. Denkbar sind jedoch auch andere vor allem mineralische Füllstoffe oder auch temperaturstabile Samen.

Bei der Folie sollte es sich erfindungsgemäß genauso um eine analog temperaturstabile Folie handeln. Beispiele dafür sind PTFE-, PEEK- oder PPSU-Folie. Auch ist es denkbar eine z.B. mit Silikon oder Metallen beschichtete oder imprägnierte Folie zu verwenden. Bei letzteren kann es sich als Trägermaterial auch um ein Gewebe oder um Papier handeln, welches beschichtet oder imprägniert wurde.

Der Füllkern liegt bevorzugt in einer dicht gepackten und damit formstabilen Form vor. Das Befüllen kann dabei beispielsweise mittels Pressluft oder Einsaugen unter Unterdruck erfolgen. Zur Verdichtung kann zusätzlich auf die Außenseite Druck, beispielsweise in einer Presse, angelegt werden. Dabei kann optional auch eine, Formgebung des Füllkerns erfolgen. Die Formgebung kann auch durch den Unter- und/oder Überdruck erfolgen bzw. unterstützt werden. Nach dem Befüllen kann die Folie entweder zu einem geschlossenen Beutel verschlossen werden oder an der Einfüllstelle offen bleiben und mit dieser nach oben zeigend in das Werkzeug eingebracht werden. Bevorzugt ist der Füllkern an einer Stelle offen ist und wird an dieser offenen Stelle in Verfahrensschritt b. in das Werkzeug gehängt.

In einer besonderen Ausführungsform der oben aufgeführten ersten oder dritten Variante wird der Füllkern in Verfahrensschritt b. derart in das Werkzeug eingelegt, dass dieser die Innenwand des Werkzeugs an mindestens zwei Stellen berührt. Dabei ist die zweite Stelle, die innerhalb des Werkezugs nicht nach oben zeigt zwangsweise verschlossen. Bei einem solchen Vorgehen ist es dann möglich, in Verfahrensschritt f. die Partikel mittels Druckluft aus dem Hohlraum zu blasen. Dazu müssen die bzw. die zweite an der Oberfläche des Hartschaumkerns zugängliche Stelle geöffnet werden.

Zu Verfahrensschritten c. und d.: grundsätzlich sind sämtliche bekannten Verfahren zur Herstellung von Partikelschäumen in das erfindungsgemäß Verfahren integrierbar. Als besonders bevorzugt hat es sich ein Verfahren, bei dem das eigentliche Schäumen unter Entspannen des Werkzeuginnenraums erfolgt, erwiesen. Ein solches Verfahren ist beispielsweise für P(M)I in der internationalen Anmeldung PCT/EP2015/064316 beschrieben. Im weiteren wird dieses Verfahren kurz als beispielhafte Ausführung der Verfahrensschritte c. und d. des vorliegenden Verfahrens ausgeführt. Dem Fachmann ist dabei klar, dass wie gesagt auch andere Partikelschaumstoffe und/oder andere Partikelschäumverfahren in den Verfahrensschritten c. und d. angewendet werden können. Daher sind die folgenden Ausführungen als bevorzugte Ausführungsform des erfindungsgemäßen Verfahrens zu betrachten:
In einem solchen bevorzugten Schäumteilverfahren werden die Matrixpartikel in einem Verfahrensschritt c0. vorgeheizt und unter Druck in das Werkzeug eingefüllt. Das Schäumen erfolgt dann bei der Schäumtemperatur durch Senken des Drucks.

Die Verfahrensschritte c. und d. weisen in dieser Ausführungsform folgende Einzelschritte auf:
c0: Erhitzen von Matrixpartikeln auf eine Normaldruck-Schäumungstemperatur T₁, wobei dies unter einem Druck p₁ erfolgt, bei dem eine Volumenzuname der P(M)I-Partikel von höchstens 10 Vol% in 10 min erfolgt,
c1: Einfüllen der Matrixpartikel in die aus Füllkern und Werkzeuginnenseite gebildete Kavität, wobei das Einfüllen bei einem Druck p₂ erfolgt, der bevorzugt höchstens 10% geringer ist als p₁, und anschließendes Schließen des Werkzeugs,
d1: Entspannen des Werkzeuginnenraums auf einen Druck p₃ bei einer Temperatur T₂, wobei ein Schäumen der Partikel erfolgt,
d2: Kühlen des Werkzeuginnenraums auf eine Temperatur T₃ und
d3: Öffnen und Entnahme des Hartschaumkerns.

Ein besonderer Vorteil dieser Ausführungsform ist es, dass das Schäumen innerhalb von höchstens 2 min durchgeführt werden kann, und dass die Verfahrensschritte a. bis d. zusammen innerhalb einer kurzen Zeitspanne von 5 bis 45 min durchgeführt werden können, wobei verfahrensschritt a. parallel zu den anderen Verfahrensschritten durchgeführt werden kann.

Ein weiterer Vorteil liegt in der gleichmäßigen Temperaturverteilung innerhalb des Materials im Moment des Aufschäumes. Dies führt zu einer besonders gleichmäßigen Verteilung und Größenverteilung der Poren im Endprodukt. So weist das Endprodukt gegenüber Schäumen des Standes der Technik keine oder nur minimale Dichtegradienten auf. Bei Schäumen des Standes der Technik schäumen die äußeren Bereiche in der Regel stärker auf als innenliegende Bereiche.

Bevorzugt liegt die Temperatur T₁ zwischen 150 und 250 °C, besonders bevorzugt zwischen 180 und 220 °C. Druck p₁ in Verfahrensschritt c0. und Druck p₂ in Verfahrensschritt c1. liegen bevorzugt jeweils zwischen 2 und 20 bar. Temperatur T₂ wird bevorzugt auf einen Wert zwischen 150 und 250 °C, besonders bevorzugt zwischen 180 und 220 °C, eingestellt. Der Druck p₃ liegt bevorzugt zwischen 0,1 und 2,0 bar, besonders bevorzugt zwischen Normaldruck und 1,5 bar.

In einer besonderen Variante des erfindungsgemäßen Verfahrens wird Verfahrensschritt c1. vor Verfahrensschritt c0. durchgeführt. In dieser Variante erfolgt das Vorheizen der Partikeln in dem Werkzeug, in dem in Verfahrensschritt d. auch geschäumt wird. Bei dieser Variante ist der Druck p₂ flexibel wählbar und es kann z.B. bei Normaldruck eingefüllt werden. Bevorzugt gegenüber dieser Variante, ist jedoch eine Ausführung des erfindungsgemäßen Verfahrens, bei der Verfahrensschritt c0. vor Verfahrensschritt c1. durchgeführt wird.

Bei dieser Ausführungsvariante ist es besonders bevorzugt die Partikel in Verfahrensschritt c0. in einem Vorratsbehälter bei Temperatur T₁ und dem Druck p₁ zu lagern und damit vorzuheizen. Die Partikel werden dann batchweise in Verfahrensschritt c1. in das Werkzeug gefüllt, wobei nach dem batchweisen Einfüllen jeweils die Verbindung zwischen Vorratsbehälter und Werkzeug geschlossen wird, bevor die Entspannung in Verfahrensschritt d1. erfolgt.

Als insbesondere günstig hat es sich erwiesen, die Matrixpartikel vor der Zugabe in Verfahrensschritt c1. in dem Vorratsbehälter bei einer Temperatur, die weniger als 50 °C unterhalb der Schäumungstemperatur liegt, und bei einem Druck, der mindestens 1 bar oberhalb des Normaldrucks liegt, gelagert werden und batchweise in Verfahrensschritt c1 in das Werkzeug gefüllt werden, wobei nach dem batchweisen Einfüllen jeweils die Verbindung zwischen Vorratsbehälter und Werkzeug geschlossen wird.

Zusätzlich oder alternativ hat es sich als sehr vorteilhaft und als das Verfahren beschleunigend erwiesen, die Partikel in Verfahrensschritt c1. in die Kavität innerhalb des Werkzeugs einzusaugen und/oder einzublasen.

Der Druck p₂ in Verfahrensschritt c1. ergibt sich dabei aus dem Druck in der Partikelvorlage, wie z.B. einem Vorratsbehälter, dem Leerdruck des Werkzeugs und den Druckveränderungen, die sich aus Ansaug- bzw. Einblasvorrichtungen ergeben. Bei der Ausgestaltung der Parameter für Verfahrensschritt c1. ist erfindungsgemäß darauf zu achten, dass alle diese Parameter so eingestellt werden, dass p₂ maximal 10% unterhalb von p₁ oder sogar oberhalb von p₁ liegt. Damit wird ein zu schnelles Aufschäumen der Partikel unterbunden.

Darüber hinaus ist es in Verfahrensschritt c1. vorteilhaft, das Werkzeug bis zu einem Füllstand zwischen 50 und 100 %, bevorzugt zwischen 75 und 98 % mit Partikeln zu befüllen. 100 % Füllstand bedeutet in diesem Zusammenhang, dass das Werkzeug bis zum obersten Rand mit den Partikeln gefüllt wird. Natürlich verbleiben dabei zwischen den Partikeln Freiräume, deren Größe von der Partikelgröße und Partikelform abhängen. Diese Freiräume können theoretisch auch bei einem Füllstand von 100% bis zu 50% des Innenraums des Werkzeugs ausmachen. In Verfahrensschritt c. werden diese Freiräume schließlich durch das Schäumen geschlossen, so dass ein homogener Hartschaumkern gebildet wird.

Vor Verfahrensschritt b. kann der Innenraum des Werkzeugs zusätzlich zum Füllkern mit so genannten Inserts ausgestattet werden. Diese werden beim Einfüllen des Granulats in Verfahrensschritt c. zunächst von diesem umgeben und dadurch im späteren Hartschaumkern als integraler Bestandteil dieses Werkstücks von der Schaummatrix ganz oder teilweise umschlossen. Bei diesen Inserts kann es sich zum Beispiel um Gegenstände mit einem Innengewinde handeln. Mittels dieses Innengewindes lassen sich die Hartschaumkerne später verschrauben. Analog können auch Bolzen, Haken, Rohre oder ähnliches eingebaut werden. Auch ist es möglich, Elektrochips oder Kabel bereits bei der Herstellung des Hartschaumkerns in diese zu integrieren.

Bezüglich der in Verfahrensschritt c. eingesetzten Matrixpartikel gibt es erfindungsgemäß verschiedene bevorzugte Ausführungsformen.

In einer ersten Ausführungsform handelt es sich bei den Matrixpartikeln um ein Mahlgut aus einem Hartschaum-, insbesondere P(M)I-Plattenpolymerisat, welches als Gusspolymerisat erhalten wird. Diese Platten können beispielsweise in einer Mühle zu geeigneten Partikeln zerkleinert werden. Gemahlene Matrixpartikel werden in dieser Variante bevorzugt mit einer Partikelgröße zwischen 1,0 und 4,0 mm eingesetzt.

In einer bevorzugten Variante der Erfindung werden diese Matrixpartikel vorgeschäumt, bevor diese in Verfahrensschritt c. in das Werkzeug gefüllt werden. Dabei ist darauf zu achten, dass das Vorschäumen nicht vollständig, sondern nur bis zu einem Schäumungsgrad zwischen 10 und 90 %, bevorzugt zwischen 20 und 80 % durchgeführt wird. Das endgültige Ausschäumen erfolgt dann in Verfahrensschritt d. Vorgeschäumte Matrixpartikel werden in dieser Variante bevorzugt mit einer Partikelgröße zwischen 1,0 und 25,0 mm eingesetzt. Bevorzugt weisen die diese vorgeschäumten Matrixpartikel eine Dichte zwischen 40 und 400 kg/m³, bevorzugt zwischen 50 und 300 kg/m³, besonders bevorzugt zwischen 60 und 220 kg/m³ und insbesondere bevorzugt zwischen 80 und 220 kg/m³ auf. Ein besonders geeignetes Verfahren zum Vorschäumen von P(M)I ist beispielsweise in der deutschen Patentanmeldung mit dem Anmeldeaktenzeichen 102013225132.7 beschrieben.

In einer dritten Ausführungsform des Verfahrens handelt es sich bei den Matrixpartikeln um Hartschaum-, bevorzugt P(M)I-Suspensionspolymerisate. Solche Suspensionspolymerisate werden bevorzugt mit einer Partikelgröße zwischen 0,1 und 1,5 mm, besonders bevorzugt zwischen 0,1 und 1,0 mm eingesetzt. Die Herstellung von P(M)I-Suspensionspolymerisaten kann beispielsweise in der internationalen Anmeldung mit dem Aktenzeichen PCT/EP2014/050658 nachgelesen werden.

In einer vierten Ausführungsform des erfindungsgemäßen Verfahrens werden vorgeschäumte Suspensionspolymerisate in Verfahrensschritt c. eingesetzt. Bezüglich des Schäumungsgrads gilt das gleiche wie zuvor für die vorgeschäumten Matrixpartikel eines Mahlguts beschrieben. Bevorzugt weisen die diese vorgeschäumten Matrixpartikel eine Dichte zwischen 40 und 400 kg/m³, bevorzugt zwischen 50 und 300 kg/m³, besonders bevorzugt zwischen 60 und 220 kg/m³ und insbesondere bevorzugt zwischen 80 und 220 kg/m³ auf. Solche vorgeschäumten Suspensionspolymerisate werden bevorzugt mit einer Partikelgröße zwischen 0,1 und 2,0 mm, besonders bevorzugt zwischen 0,2 und 1,5 mm eingesetzt.

Optional kann in dem erfindungsgemäßen Verfahren während der ersten Hälfte, bevorzugt während des ersten Viertels der Verfahrensdauer des Verfahrensschritts d. Heißluft, ein heißes Gas oder Dampf, bevorzugt ein heißes Inertgas oder Luft, in den Innenraum des Werkzeugs geleitet werden. Diese Einleitung hat dabei eine Temperatur zwischen 90 und 300 °C, bevorzugt zwischen 150 und 250 °C.

Gegenüber anderem Stand der Technik können mittels eines Verfahrens auf Basis des Entspannungs-Schäumens Formteile oder Schaumwerkstoffe mit einer deutlich homogeneren Porenstruktur und ohne Fehlstellen und gleichzeitig in komplexeren Formen hergestellt werden. Weiterhin ist es mit diesem Verfahren möglich, diese komplexen Formen schnell, in kurzen Taktzeiten und mit besonders guter Qualität herzustellen. Insbesondere weist das erfindungsgemäße Verfahren gegenüber Verfahren des Standes der Technik verkürzte Aufheiz- und Abkühlzyklen auf. Weiterhin hat das vorliegende Verfahren gegenüber dem Stand der Technik den großen Vorteil, dass dieses so schonend ist, dass die Oberfläche der Matrixpartikel nicht geschädigt wird.

In einer besonderen Ausführungsform des erfindungsgemäßen Verfahrens ist es möglich, die Innenseiten der Werkzeugschalen vor Verfahrensschritt b. oder c. mit einem Material, welches eine spätere Deckschicht bildet, bevorzugt mit Prepregs oder Organoblechen auszulegen. Auch ist es möglich beispielsweise Dekorfolien oder Metalle einzubringen. Die Folien, Metalle, Prepregs oder Organbleche können optional mit einem Klebstoff oder einem Haftvermittler beschichtet sein. Beim Schäumen in Verfahrensschritt d. verbindet sich der gebildete Schaum dann mit den beschichteten oder unbeschichteten Folien, Metallen, Prepregs oder Organoblechen, die damit Deckschichten bilden. Mittels eines solchen Vorgehens wird der Hartschaumkern in Verfahrensschritt d. in Form eines Composite-Materials mit Deckschichten entnommen.

Alternativ oder zusätzlich dazu kann auch die Außenseite des Füllkerns vor Verfahrensschritt b. oder c. mit einem analogen Material, welches eine spätere Deckschicht bildet, bevorzugt mit Prepregs oder Organoblechen, belegt werden.

Die Formulierung "eine spätere Deckschicht bildet" bedeutet dabei bevorzugt, dass es sich um ein Organoblech oder Prepreg handelt, welches unter den Schäumungsbedingungen parallel aushärtet.

Zu den Verfahrensschritten e. und f. seien noch folgende Aspekte aufgezeigt:
Sollte der Füllkern gänzlich verschlossen sein, muss dieser an einer oder mehreren, an der Außenseite des Werkstoffs zugänglichen Stelle geöffnet werden. Die Entnahme der Partikel in Verfahrensschritt f. erfolgt dann im einfachsten Fall durch simples Ausschütten, wobei die Partikel danach in der Regel wiederverwendet werden können. Unter Umständen ist es in Verfahrensschritt f. nötig, die Entnahme z.B. durch ein Schütteln, Ausblasen, Stochern oder Schlagen zu unterstützen.

Optional und vor allem in Abhängigkeit des Folienmaterials und der Geometrie des Hohlraums kann nach Verfahrensschritt f. die Folie aus dem Hartschaumkern herausgezogen werden. Sollte dies nicht möglich oder gewünscht sein, kann diese auch ohne nennenswerten Gewichtsbeitrag innerhalb des Hohlraums verbleiben.

Zusätzlich können zur Verbesserung der Haftung zwischen Schaumkernmaterial und Deckschichten, die in späteren Verfahrensschritten zur Herstellung von Composite-Materialien eine Rolle spielt, Haftvermittler verwendet werden. Diese Haftvermittler können alternativ zu einer Applikation in einem späteren Verfahrensschritt auch schon vor dem erfindungsgemäßen Vorschäumen auf der Oberfläche der Matrixpartikel aufgetragen sein. Als Haftvermittler haben sich insbesondere Polyamide oder Poly(meth)acrylate als geeignet erwiesen. Es können aber auch niedermolekulare Verbindungen, die aus der Herstellung von Compositematerialien, insbesondere in Abhängigkeit vom verwendeten Matrixmaterial der Deckschicht, dem Fachmann bekannt sind, verwendet werden.

Das erfindungsgemäße Verfahren hat insbesondere den großen Vorteil, dass es sehr schnell und damit in Kombination mit Folgeprozessen mit sehr geringen Taktzeiten durchgeführt werden kann. Damit kann das erfindungsgemäße Verfahren sehr gut in einer Serienproduktion integriert werden.

Für das gesamte erfindungsgemäße Verfahren richten sich die zu wählenden Verfahrensparameter nach der Auslegung der im Einzelfall eingesetzten Anlage und deren Auslegung, sowie den eingesetzten Materialien. Sie können durch wenige Vorversuche für den Fachmann leicht ermittelt werden.

Erfindungsgemäß ist es auch möglich, das Zwischenprodukt nach Verfahrensschritt d., enthaltend den Füllkern, zu lagern und/oder zunächst weiteren Veredelungsschritten, wie z.B. einem Verkleben, Einbauen, Versehen mit Deckschichten, Polieren, Schneiden oder Sägen zu unterziehen. Die Partikel aus dem Füllkern können dann in den Verfahrensschritten e. und f. optional erst danach entfernt werden. Dies stabilisiert den Schaumwerkstoff während der Weiterverarbeitung bzw. Lagerung zusätzlich.

Das erfindungsgemäß verwendete Material ist bevorzugt P(M)I, insbesondere PMI. Solche P(M)I-Schäume zeichnen sich durch eine besondere Festigkeit aus. Die P(M)I-Schäume werden normalerweise in einem zweistufigen Verfahren hergestellt: a) Herstellung eines Gusspolymerisats und b) optionales teilweises Aufschäumen dieses Gusspolymerisats. Nach Stand der Technik werden diese dann in die gewünschte Form geschnitten bzw. gesägt. Eine Alternative, die technisch noch weniger etabliert ist, ist das ausgeführte In-Mold-Foaming für das das erfindungsgemäße Verfahren eingesetzt werden kann.

Zur Herstellung des P(M)I werden zunächst Monomergemische, welche (Meth)acrylsäure und (Meth)acrylnitril, vorzugsweise in einem Molverhältnis zwischen 2:3 und 3:2, als Hauptbestandteile enthalten, hergestellt. Zusätzlich können weitere Comonomere verwendet werden, wie z.B. Ester der Acryl- oder Methacrylsäure, Styrol, Maleinsäure oder Itaconsäure bzw. deren Anhydride oder Vinylpyrrolidon. Dabei sollte der Anteil der Comonomeren jedoch nicht mehr als 30 Gew% betragen. Geringe Mengen von vernetzenden Monomeren, wie z.B. Allylacrylat, können auch verwendet werden. Die Mengen sollten jedoch vorzugsweise höchstens 0,05 Gew% bis 2,0 Gew% betragen.

Das Gemisch für die Copolymerisation enthält ferner Treibmittel, die sich bei Temperaturen von etwa 150 bis 250 °C entweder zersetzen oder verdampfen und dabei eine Gasphase bilden. Die Polymerisation erfolgt unterhalb dieser Temperatur, so dass das Gusspolymerisat ein latentes Treibmittel enthält. Die Polymerisation findet zweckmäßig in Blockform zwischen zwei Glasplatten statt.

Die Herstellung solcher PMI-Halbzeuge ist dem Fachmann grundsätzlich bekannt und kann beispielsweise in EP 1 444 293, EP 1 678 244 oder WO 2011/138060 nachgelesen werden. Als PMI-Halbzeuge seien insbesondere solche genannt, die in aufgeschäumter Form unter dem Produktnamen ROHACELL^{®} von der Firma Evonik Industries AG vertrieben werden. Bezüglich Herstellung und Verarbeitung sind zu den PMI-Schäumen Acrylimid-Halbzeuge (PI-Halbzeuge) als Analoga anzusehen. Aus toxikologischen Gründen sind diese jedoch gegenüber anderen Schaummaterialien deutlich weniger bevorzugt.

In einer zweiten Variante des erfindungsgemäßen Verfahrens handelt es sich bei den P(M)I-Partikeln um ein Suspensionspolymerisate, die als solche direkt in das Verfahren eingebracht werden können. Die Herstellung solcher Suspensionspolymerisate kann beispielsweise in DE 18 17 156 oder in WO 2014/124774 nachgelesen werden.

Alternativ zu P(M)I können erfindungsgemäß jedoch auch andere Schaumstoffe, insbesondere Hartschaumstoffe, wie beispielsweise PP, PET, PE, PVC oder harte PU-Schäume eingesetzt werden. Eine Anpassung des Verfahrens auf diese Schaumstoffe erfolgt über die jeweils spezifisch benötigten Verfahrensparameter beim Schäumen und sind für den Fachmann einfach herzuleiten.

Die erfindungsgemäß hergestellten Schaumkörper oder einen Schaumkern enthaltendes Sandwichmaterialien sind gleichsam Bestandteil der vorliegenden Erfindung und zeichnen sich insbesondere dadurch aus, dass diese einen zumindest an einer Stelle mit der Oberfläche des Schaumkerns verbundenen Hohlraum aufweisen. Diese Stelle macht dabei bevorzugt zwischen 1 und 10 Flächenprozent der Oberfläche aus. Optional kann diese Stelle anschließend mit einem Deckmaterial mittels Kleben, Nähen, Pinnen oder Bolzen verschlossen werden. Auch kann ein Prepreg oder Organblech aufgelegt und ausgehärtet werden. Weiterhin sind diese optional mit den zuvor beschriebenen Inserts versehen.

Weiterhin weisen diese Schaumkörper oder Schaumkerne zwischen der innenliegenden Oberfläche des Schaumstoffs und dem Hohlraum eine Folie, ein ausgehärtetes Prepreg oder Organoblech oder gar nichts auf. Bevorzugt handelt es sich dabei um P(M)I-Hartschaumkerne in Sandwichmaterialien oder um P(M)I-Schaumkörper.

Der Hartschaumkern kann bevorzugt eine komplexe Form aufweisen. Die Oberfläche eines erfindungsgemäßen Schaumkörpers ist dabei zu mindestens 95 % von einer aus dem Hartschaummaterial bestehenden, bevorzugt eine Dicke von mindestens 100 µm aufweisenden Haut umschlossen ist. Das bedeutet, dass diese neuartigen Hartschaumkerne oder -körper keine offenen Poren auf der Oberfläche aufweisen und damit gegenüber den Materialien des Standes der Technik auch ohne eine zusätzliche Deckschicht über eine besondere Stabilität, z.B. gegenüber Stößen oder Schlägen, aufweisen.

Diese Materialien sind für sich genommen und damit unabhängig von dem erfindungsgemäßen Verfahren neu und somit gleichfalls Bestandteil der vorliegenden Erfindung.

Bevorzugt weisen diese neuartigen Hartschaumkerne eine Dichte zwischen 20 und 180 kg/m³ auf. Diese Dichteangabe bezieht sich dabei auf einen hohlen Schaumkörper einschließlich Hohlraum, dessen Öffnung real oder fiktiv geschlossen ist.

Die erfindungsgemäß hergestellten geschäumten Schaumkörper können beispielsweise zu Schaumkern-Composite-Materialien weiterverarbeitet werden. Die erfindungsgemäßen Schaumkörper bzw. Schaumkern-Composite- bzw. Sandwich-Materialien können insbesondere Anwendung in der Serienfertigung z.B. für Karosseriebau oder für Innenverkleidungen in der Automobilindustrie, Interieurteile im Schienenfahrzeugs- oder Schiffsbau, in der Luft- und Raumfahrtindustrie, im Maschinenbau, bei der Herstellung von Sportgeräten, beim Möbelbau oder bei der Konstruktion von Windkraftanlagen finden. Insgesamt sind die erfindungsgemäßen Hartschaumkerne für jegliche Art des Leichtbaus prinzipiell geeignet.

## Patentansprüche

1. Verfahren zur Herstellung von komplexen Hartschaumkernen, folgende Verfahrensschritte aufweisend:
a. Herstellen eines mit Partikeln gefüllten, aus einer Folie bestehenden. Füllkerns,
b. Einlegen des Füllkerns in ein Werkzeug und anschließendes Schließen des Werkzeugs,
c. Einfüllen von vor- oder ungeschäumten Matrixpartikeln in die Kavität zwischen dem Füllkern und der Innenwand des Werkzeugs,
d. Schäumen der Matrixpartikel, Öffnen des Werkzeugs und Entnahme des Hartschaumkerns,
e. optionales Öffnen der Folie an dem zugänglichen ehemaligen Berührungsbereich aus Verfahrensschritt b. und
f. Entnahme der Partikel aus dem Hartschaumkern.

2. Verfahren gemäß Anspruch 1, **dadurch gekennzeichnet, dass** der Füllkern in Verfahrensschritt b. derart eingelegt wird, dass der Füllkern zwischen 0,5 und 10 Flächenprozent der Innenwand des Werkzeugs berührt.

3. Verfahren gemäß Anspruch 1, **dadurch gekennzeichnet, dass** der Füllkern in Verfahrensschritt b. derart eingelegt wird, dass der Füllkern nach Verfahrensschritt d. vollständig von dem Schaumstoff umgeben ist, und dass der Schaumstoff in Verfahrensschritt e. teilweise aufgebohrt oder aufgeschnitten wird, um die Partikel in Verfahrensschritt f. zu entnehmen.

4. Verfahren gemäß Anspruch 1, **dadurch gekennzeichnet, dass** der Füllkern in Verfahrensschritt b. derart eingelegt wird, dass der Füllkern zwischen 0,5 und 10 Flächenprozent der Innenwand des Werkzeugs berührt, und dass diese Stelle mit einer leicht zu entfernenden Vorrichtung verschlossen ist, und dass diese Vorrichtung in Verfahrensschritt e. entfernt wird.

5. Verfahren gemäß mindestens einem der Ansprüche 1 bis 4, **dadurch gekennzeichnet, dass** es sich bei den Partikeln um Sand, bei der Schäumungstemperatur stabile und feste Polymerpartikel, Metallpartikel oder Glasperlen handelt.

6. Verfahren gemäß mindestens einem der Ansprüche 1 bis 5, **dadurch gekennzeichnet, dass** es sich bei der Folie um eine PTFE-, PEEK- oder PPSU-Folie oder um ein silikonhaltiges Papier oder eine silikonhaltige Folie handelt, und dass diese optional nach Verfahrensschritt f. aus dem Hartschaumkern herausgezogen wird.

7. Verfahren gemäß mindestens einem der Ansprüche 1 bis 6, **dadurch gekennzeichnet, dass** in Verfahrensschritt a. der Füllkern dicht gepackt und mittels einer Presse und/oder durch Anlegen von Unterdruck geformt wird.

8. Verfahren gemäß mindestens einem der Ansprüche 1 bis 7, **dadurch gekennzeichnet, dass** der Füllkern an einer Stelle offen ist und der Füllkern an dieser offenen Stelle in das Werkzeug gehängt wird.

9. Verfahren gemäß mindestens einem der Ansprüche 1 bis 8, **dadurch gekennzeichnet, dass** die Innenseite des Werkzeugs vor Verfahrensschritt b. oder c. mit einem Material, eine spätere Deckschicht bildend, bevorzugt mit Prepregs oder Organoblechen ausgelegt wird.

10. Verfahren gemäß mindestens einem der Ansprüche 1 bis 9, **dadurch gekennzeichnet, dass** die Außenseite des Füllkerns vor Verfahrensschritt b. oder c. mit einem Material, eine spätere Deckschicht bildend, bevorzugt mit Prepregs oder Organoblechen belegt wird.

11. Verfahren gemäß mindestens einem der Ansprüche 1 bis 10, **dadurch gekennzeichnet, dass** der Füllkern in Verfahrensschritt b. derart eingelegt wird, dass dieser die Innenwand des Werkzeugs an mindestens zwei Stellen berührt, und dass in Verfahrensschritt f. die Partikel mittels Druckluft aus dem Hohlraum geblasen werden.

12. Verfahren gemäß mindestens einem der Ansprüche 1 bis 11, **dadurch gekennzeichnet, dass** es sich bei den Matrixpartikeln um vorgeschäumte P(M)I-Partikel mit einer Partikelgröße zwischen 1,0 und 25,0 mm oder um P(M)I-Suspensionspolymerisate mit einer Partikelgröße zwischen 0,1 und 1,0 mm handelt.

13. Verfahren gemäß mindestens einem der Ansprüche 1 bis 12, **dadurch gekennzeichnet, dass** die Matrixpartikel in Verfahrensschritt f. vorgeheizt unter Druck eingefüllt werden, und dass das Schäumen bei der Schäumtemperatur durch Senken des Drucks erfolgt.

14. Verfahren gemäß mindestens einem der Ansprüche 1 bis 13, **dadurch gekennzeichnet, dass** die Matrixpartikel in Verfahrensschritt c. in das Werkzeug eingesaugt und/oder eingeblasen werden.

15. Verfahren gemäß mindestens einem der Ansprüche 1 bis 14, **dadurch gekennzeichnet, dass** die kavität zwischen Füllkern und Innenseite des Werkzeugs in Verfahrensschritt c. zu einem Füllstand zwischen 50 und 100 % mit Matrixpartikeln gefüllt wird.

16. Verfahren gemäß mindestens einem der Ansprüche 1 bis 15, **dadurch gekennzeichnet, dass** die Matrixpartikel vor der Zugabe in in Verfahrensschritt c. in einem Vorratsbehälter bei einer Temperatur, die weniger als 50 °C unterhalb der Schäumungstemperatur liegt, und bei einem Druck, der mindestens 1 bar oberhalb des Normaldrucks liegt, gelagert werden und batchweise in Verfahrensschritt c. in das Werkzeug gefüllt werden, wobei nach dem batchweisen Einfüllen jeweils die Verbindung zwischen Vorratsbehälter und Werkzeug geschlossen wird.

17. Schaumkörper oder einen Schaumkern enthaltendes Sandwichmaterial, **dadurch gekennzeichnet, dass** dieser einen zumindest an einer Stelle mit der Oberfläche des Schaumkerns verbundenen Hohlraum aufweist, und dass sich zwischen dem Schaumkern und dem Hohlraum eine Folie, ein ausgehärtetes Prepreg oder Organoblech oder gar nichts befindet.
